# EUROPEAN PATENT APPLICATION

(11) **EP 2 988 193 A1**
(43) Date of publication of application: **24.02.2016**
(21) Application number: 15181958.8
(22) Date of filing: 21.08.2015
(51) Int. Cl.: G06F 3/023

(54) **AUTO RE-PAIRING AND VIRTUAL PORT NUMBER FOR REMOTE MANAGEMENT SYSTEM FOR SERVERS**

(30) Priority: 21.08.2014 US 201414465689
(71) Applicant: ATEN International Co., Ltd., New Taipei City 221 (TW)
(72) Inventor: LIU, Yi-Li, 221 New Taipei City (TW)
(74) Representative: von Kreisler Selting Werner - Partnerschaft von Patentanwälten und Rechtsanwälten mbB

(57) **Abstract**

In a KVM switch system where multiple servers and clients are connected to one or more KVM switches, dongles (adapters) are connected between each server and the KVM switch. Each dongle is always connected to the same server, and its unique dongle ID can be used to identify the servers. During a communication session between a target server and a client, if the target server is moved from one computer port of the KVM switch system to another, the KVM switch automatically detects the move using dongle IDs, and automatically re-establish communication between the client and the target server via the other computer port, without the client initiating a new connection request. Virtual port numbers are associated with dongle IDs and are used by the on-screen display of the client so that the displayed list of servers is not affected when the servers are moved to different ports.

## Description

### BACKGROUND OF THE INVENTION

### Field of the Invention

This invention relates to a remote management system for servers, and in particular, it relates to auto re-pairing and use of virtual port number in a remote management system for servers.

### Description of the Related Art

In a distributed computing or cloud computing system, a plurality of computers (e.g. servers or PCs) are located at one location and connected to one or more KVM (keyboard, video, mouse) switches. Remote client computers located at other locations can access the computers via the KVM switch, through a network (such as a WAN, LAN, the Internet, Intranet, Ethernet, wireless network, etc.). A local user console (monitor, keyboard and mouse) can also be connected to a console port of the KVM switch via cables. A remote client can logon to the KVM switch via the network, for example by using a web browser, and can exchange keyboard, video and mouse data with one or more of the computers connected to the KVM switch. The KVM switch has a controller connected to a network interface circuit (NIC) for handling packets containing keyboard and mouse signals received from a remote client on a network, and transmits packets containing video signals and other signals to the network via the NIC. The KVM switch implements an on-screen display (OSD) system to assist the client in communicating with the KVM switch and perform various functions such as logging on, selecting a computer to be connected to, etc.

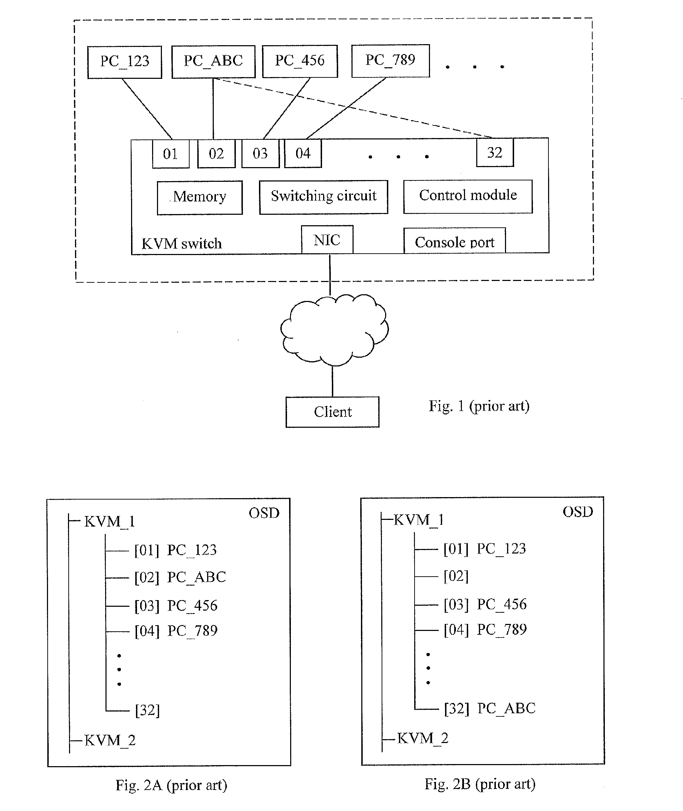

As schematically illustrated in Fig. 1, the KVM switch has a plurality of physical computer ports (labeled 01, 02, 03, ... 32 in this example), to which the server computers (labeled PC_123, PC_ABC, PC_456, etc. in this example) can be connected. Each computer port is assigned a physical port number. Multiple client computers can be connected to the KVM switch simultaneously, and each client is assigned a network (LAN) port number. Each console port for local consoles is assigned a console port number. The KVM switch has a switching circuit for transmitting signals between each network port or console port and a selected computer port.

On the OSD display on the client computer, the physical port numbers are used to display a list of servers available to be accessed by the client. In the example schematically shown in Fig. 2A, the OSD screen on the client lists a number of servers by their names (PC_123, PC_ABC, PC_345, etc.) arranged in a sequence according to the physical port numbers [01], [02], [03], etc., of the KVM switch to which the servers are connected.

### SUMMARY OF THE INVENTION

The present invention is directed to a remote server management method and related apparatus that substantially obviates one or more of the problems due to limitations and disadvantages of the related art.

An object of the present invention is to provide an auto re-pairing function in the remote server management system.

Another object of the present invention is to make the user interface (OSD) more user-friendly by using virtual port number.

Additional features and advantages of the invention will be set forth in the descriptions that follow and in part will be apparent from the description, or may be learned by practice of the invention. The objectives and other advantages of the invention will be realized and attained by the structure particularly pointed out in the written description and claims thereof as well as the appended drawings.

To achieve these and other advantages and in accordance with the purpose of the present invention, as embodied and broadly described, the present invention provides a remote server management method, implemented on a remote management device, the remote management device including: a plurality of computer ports for connecting to server computers, including at least a first computer port and a second computer port; a user port for connecting to a user device; a switching circuit for selectively connecting the user port to the first or the second computer port; and a control module; where the method includes: (a) detecting a connection of a target server computer to the first computer port; (b) transmitting video data representing a desktop image of the target server computer at the first computer port to a user device via the user port; (c) automatically detecting a move of the target server from the first computer port to the second computer port; and (d) upon the detection in step (c), transmitting video data representing a desktop image of the target server computer at the second computer port to the user port, based on a correspondence between the user port and the target server computer, without receiving any request from the user device via the user port to change computer ports.

In another aspect, the invention provides a remote management device, which includes: a plurality of computer ports for connecting to server computers, including at least a first computer port and a second computer port; a user port for connecting to a user device; a switching circuit for selectively connecting the user port to the first or the second computer port; a control module; and a memory having a computer readable program code embedded therein, the program code being configured to cause the remote management device to execute a process which includes: (a) detecting a connection of a target server computer to the first computer port; (b) transmitting video data representing a desktop image of the target server computer at the first computer port to the user device via the user port; (c) automatically detecting a move of the target server computer from the first computer port to the second computer port; and (d) upon the detection in step (c), transmitting video data representing a desktop image of the target server computer at the second computer port to the user port, based on a correspondence between the user port and the target server computer, without receiving any request from the user device via the user port to change computer ports.

In another aspect, the invention provides a remote server management method, implemented on a remote management device, the remote management device including: a plurality of physical computer ports for connecting to server computers; a user port for connecting to a user device; a switching circuit for selectively connecting the user port to one of the physical computer ports; and a control module; the method including: (a) storing a system configuration table which indicates a correspondence between physical computer ports of the remote management device and server computers connected to the physical computer ports; (b) storing a correspondence between each of a plurality of server computers connected to the remote management device and a unique virtual computer port number, the virtual computer port numbers being independent of the physical computer ports that the server computers are connected to; (c) based on the correspondence between the server computers and the virtual computer port numbers, transmitting port names corresponding to the plurality of server computers and the corresponding virtual computer port numbers to a user device via the user port to be displayed to a user; (d) receiving a connection request from the user device which identifies a target virtual computer port number to be connected to; (e) determining a target server computer corresponding to the virtual computer port number using the correspondence between the server computers and the virtual computer port numbers; (f) determining a physical port which the target server computer is connected to using the system configuration table; and (g) transmitting video data representing a desktop image of the target server computer at the physical computer port determined in step (f) to the user device via the user port.

It is to be understood that both the foregoing general description and the following detailed description are exemplary and explanatory and are intended to provide further explanation of the invention as claimed.

### BRIEF DESCRIPTION OF THE DRAWINGS

Figure 1 schematically illustrates a convention KVM system.
Figures 2A and 2B illustrate the OSD display on the client computer of the system of Fig. 1 before and after a port change, respectively.
Figure 3 schematically illustrates a KVM system according to an embodiment of the present invention.
Figure 4 schematically illustrate a network port connection table according to an embodiment of the present invention.
Figure 5 schematically illustrate an auto re-paring method executed by the KVM switch according to an embodiment of the present invention.
Figure 6 schematically illustrates a method executed by a client computer and the KVM switch according to another embodiment of the present invention.

### DETAILED DESCRIPTION OF THE PREFERRED EMBODIMENTS

Embodiments of the present invention are designed to solve the following problems.

Sometimes, a maintenance worker in the server room where the KVM switch is located may need to change the physical computer port of a server, i.e., move the server form one port of the KVM switch to another, by unplugging the cable for the server from one port and plugging it into another port. In a normal operation the unplugging and plugging actions are done in quick successions, e.g. within a few seconds. Such operations often occur without the remote client's knowledge. In conventional KVM systems, such a port change will break the connection between the client and the server being moved, including video, keyboard, mouse and virtual media connections between the client and the server. Moreover, after such a port change, the port number of the server is changed to the new port number on the client's OSD display. For example, if the server named PC_ABC is unplugged from port 02 and plugged into port 32 (as schematically illustrated by the dashed line in Fig. 1), the list of servers displayed on the OSD screen will change from that shown in Fig. 2A to that shown in Fig. 2B, where server named PC_ABC is no longer listed next to the port number [02] but is now listed next to the port number [32] which is located toward the bottom of the list. If the user at the client computer is already familiar with the order of the servers being displayed on the OSD screen and sees that the server PC_ABC is no longer listed next to the port number [02], it may cause confusion on the part of the user as to whether the server PC_ABC is still available. Even if the user remembers the name of the server in question (PC_ABC) and can search the OSD to see that this server is now at port [32], and switch his connection to the new port number, this change in port number still causes interruption of connection and inconvenience to the user.

In addition, in some conventional KVM systems, the OSD provides a "my favorites" function to allow the user to selectively display some servers together in a designated area, e.g. a "favorites" folder, so that the user can more easily select them for access. In conventional systems, the "my favorites" display uses physical port numbers to identify and organize the servers. Thus, when a server is changed from one port to another port, the server may disappear from the "my favorites" list. For example, in the above example, if the server PC_ABC at port [02] was in the favorites folder, and it is changed to port [32] which was not in the favorites folder, then its name will disappear from the favorites folder after the change, even though the port [02] may still be in the favorites folder.

These problems become more difficult when multiple KVMs, often rack-mounted, are connected together, for example in a daisy-chain and/or cascading manner. In a daisy-chain connection, two KVM switches are connected to each other by a cable plugged into dedicated daisy-chain ports of the KVM switches. In a cascading connection, one KVM switch is connected to a server port of another KVM switch. Such multiple connected KVM switches for a system where each computer port of each KVM switch has a unique port number or ID within the system. Sometimes there is a need to move a server from a port of one KVM switch to a port of another KVM switch within the system, by unplugging it from one port and plugging it into the other port. For example, if one KVM switch needs to be removed or replaced, there will be a need to move the servers connected to that KVM switch to one or multiple other KVM switches, either temporarily or permanently. On the client computer's OSD display, multiple KVM switches of the system and their connected servers may be listed in a collapsible tree structure, an example of which is shown in Figs. 2A and 2B ("KVM_1", "KVM_2"). Thus, when a server is moved from a port of one KVM switch to a port of another KVM switch, it is even more confusing an inconvenient for the user.

Moving servers to different computer ports can be a complicated operation for the maintenance workers as well. For example, when replacing a KVM switch, one or more servers may need to be moved from ports of the old KVM switch to other KVM switches temporarily, and then moved back to the replacement KVM switch once that KVM switch is installed. In conventional KVM systems, the maintenance worker needs to record both the old port numbers and the temporary port numbers, so that the cables can be re-plugged into the correct ports on the replacement KVM switch. Sometimes the maintenance worker needs to attach physical tags to the server cables to identify them.

Embodiments of the present invention provide methods and apparatus that solve the above problems.

As required, a detailed illustrative embodiment of the present invention is disclosed herein. However, techniques, systems, operating structures and methods in accordance with the present invention may be embodied in a wide variety of forms and modes, some of which may be quite different from those in the disclosed embodiment. Consequently, the specific structural and functional details disclosed herein are merely representative, yet in that regard, they are deemed to afford the best embodiment for purposes of disclosure and to provide a basis for the claims herein, which define the scope of the present invention. The following presents a detailed description of the preferred embodiment (as well as some alternative embodiments) of the present invention.

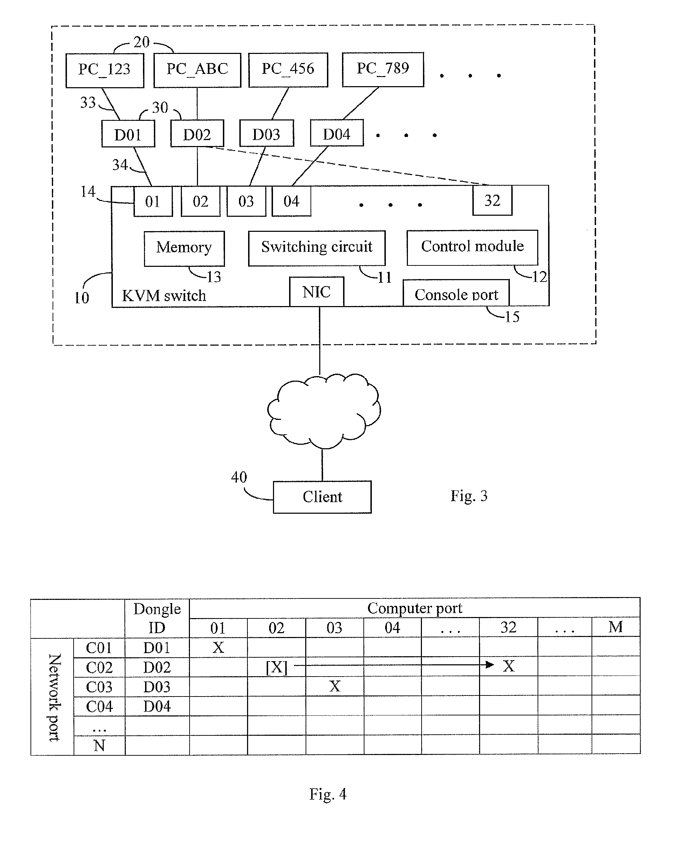

According to an embodiment of the present invention, schematically illustrated in Fig. 3, a dongle (also referred to as adapter or a computer interface module) 30 (labeled D01, D02, D03, etc.) is connected between each server computer 20 (labeled PC_123, PC_ABC, PC_456, etc.) and a computer port 14 (labeled 01, 02, 03, ... 32) of the KVM switch 10. Each dongle 30 can be formed integrally with the cable 33 connecting the corresponding server computer 20 and the dongle, or the cable 34 connecting the dongle to the KVM switch 10, or both, or neither. If the dongle 30 is not formed integrally with a cable 33/34, the dongle and the cable have appropriate connectors (either standard or proprietary) to connect with each other. Typically, the cable 33 between the dongle and the server 20 has a video (e.g. VGA) connector for plugging into the monitor port of the server to transmit video signals, and a USB connector or two PS2 connectors for plugging into a USB port or two PS2 ports of the server for transmitting keyboard and mouse signals. Typically, the cable 34 between the dongle and the KVM switch has a CAT-5 connector for plugging into the computer port 14 of the KVM switch 10. Of course, these connectors are merely examples, and other types of connectors for the cables may be used. Although only one KVM switch is shown in Fig. 3, multiple KVM switches may be connected together in the manners mentioned above, each KVM switch having multiple computer ports 14 for connecting to servers 20 via dongles 30, to form a KVM switch system.

Each dongle 30 contains a circuit and memory. Within the KVM switch system, each dongle 30 has a unique dongle ID (also referred to as adapter ID or computer interface module ID) stored in its circuit or memory, and each dongle is always connected to the same server computer 20 during normal operation and maintenance. This way, the dongle IDs are uniquely correlated with the respective server computers and can be used to uniquely identify the server computers. A reason that dongle IDs are used to identify the servers, rather than directly using an inherent unique ID of the server to identify the servers, is that the dongle IDs can be assigned by system administrators of the KVM switch system. The KVM switch 10 maintains a dongle-to-server correspondence table that indicates the one-to-one fixed correspondence between the dongle IDs and the server names or IDs. Of course, the dongles for the servers can be changed by the system administrator, in which case the dongle-to-server correspondence table will be updated, e.g. manually by the system administrator.

The KVM switch 10 also stores a system configuration table that records the current connection of dingle IDs to the computer ports, i.e., which dongle ID is connected to which computer port. This system configuration table is automatically updated by the KVM switch as will be described in more detail later.

The KVM switch 10 is connected to a network via a network interface circuit (NIC), and one or more client computers 40 can communicate with the KVM switch via the network, for example by using a browser program. Each client is assigned a network (LAN) port number by the KVM switch 10, and the switching circuit 11 of the KVM switch transmits signals between each network port and a selected computer port. The network ports are virtual ports by which client computers communicate with the KVM switch.

A local user console (monitor, keyboard and mouse) can also be connected to one or more console ports 15 of the KVM switch 10 via cables. Each console port is assigned a console port number. The embodiments described below focus on the communication between the KVM switch and a client computer located at a network port, but the methods applies equally to communications between the KVM switch 10 and a user console located a console port. More generally, as used in the appended claims, the term "user port" generally refers to either a network ports or a console port, and the term "user device" generally refers to either a client computer or a user console, as the case may be.

In a conventional KVM switch system, the KVM switch maintains a connection table which indicates a correspondence between the network ports and the computer ports, i.e., which network port is communicating with which computer port. This correspondence is established when a client computer, at the beginning of a connection session, selects a server (located at a particular computer port number) to be connected to. Thus, when the server is unplugged from the computer port, the connection between the client and the server is broken because the server is no longer present at that computer port.

In embodiments of the present invention, the KVM switch 10 maintains a network port connection table which indicates a correspondence between the network ports and the dongle IDs for the corresponding servers that the network ports are currently connected to, as well as the computer ports for the corresponding servers, as schematically illustrated in Fig. 4. This illustration is conceptual one with a matrix showing which network port is connected to which computer port (by the "X" marks); the table can in fact be a three-column table of network port number, dongle ID, and computer port number. Alternatively, the network port connection table can include only two columns, to correlate the network ports to the dongle IDs, i.e., to indicate which client is connected to which server. This is sufficient because the system configuration table stores the correlation between dongle IDs and computer port numbers.

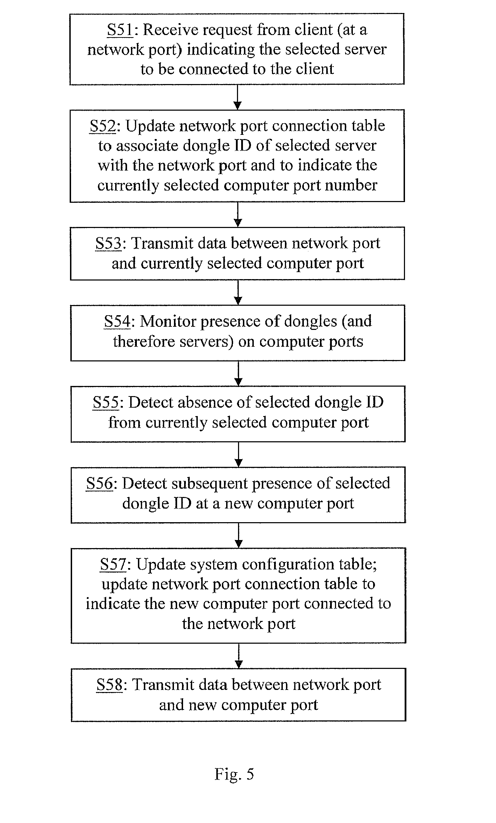

A method executed by the KVM switch 10 according to embodiments of the present invention is described with reference to Fig. 5. When the client 40, after logging on to the KVM switch 10 and being assigned a network port, wishes to establish a connection session with a selected server (also referred to as the target server), the client sends a connecting request to the KVM switch which identifies the selected server (step S51). The server may be identified by, for example, the server name or physical port number. The KVM switch 10 updates the network port connection table to associate the dongle ID for the selected server (referred to as the selected dongle ID) with the network port number of the client and to indicate the computer port number to which the selected server (dongle ID) is currently connected (referred to as the currently selected computer port) (step S52). If the request from the client identifies the selected server by its server name, then in step S52 the KVM switch 10 looks up the dongle-to-server correspondence table to determine the dongle ID for the selected server. If the request from the client identifies a selected computer port number, the KVM switch looks up the system configuration table to determine the dongle ID that is currently connected to the selected computer port number.

The KVM switch 10 then transmits data between the network port of the client and the currently selected computer port, so that the client is connected to and exchanges data with the selected server (step S53). This may include, for example, transmitting video data representing a desktop image of the selected server to the client, and transmitting keyboard and/or mouse data from the client to the selected server. In the instant embodiments, the video data representing the desktop images originate from the servers and are processed by the KVM switch, such as A-to-D conversion, encoding and/or compression, before being transmitted to the client. Audio data and other data may also be transmitted between the server and the client and they may be processed by the KVM switch as well.

The KVM switch 10 continuously monitors the presence of the dongles (which indicates the presence of the server computers) on the various computer ports (step S54). For example, this can be done by polling the dongles periodically (e.g. every few seconds), and obtaining the dongle IDs in response. Steps S55 to S58 occur when a server (e.g. server "PC_ABC" depicted in the example shown in Fig. 3) is unplugged from the currently selected computer port (computer port 02 in this example) and subsequently (within a predetermined short time period, e.g. 10 second) plugged into a new computer port (computer port 32 in this example). As mentioned earlier, the dongle is always connected to the corresponding server. Moving a server from one computer port to another entails unplugging the cable between the dongle and the KVM switch from one computer port and plugging it into the other computer port. The dashed line in Fig. 3 schematically depicts the dongle D02 (for server PC_ABC) being now connected to computer port 32.

When the selected server along with its dongle is unplugged from the currently selected computer port, the KVM switch 10 detects the absence of the selected dongle ID from the currently selected computer port (step S 55). At this time, the KVM switch 10 continues to monitor all computer ports to detect whether the selected dongle ID is subsequently connected to another computer port (step S56). This is done by detecting a connection event at another computer port, and obtaining the dongle ID of the connected dongle to determine whether it matches the selected dongle ID (D02 in this example) that was previously unplugged from the currently selected computer port (port 02 in this example). When the KVM switch 10 detects that the selected dongle ID is now connected to the new computer port, the KVM switch updates the system configuration table to indicate the dongle ID is now connected to the new computer port (step S57). If the network port connection table has a column for the computer port numbers, the KVM switch also updates the network port connection table to indicate that for this network port, the currently selected computer port is replaced by the new computer port number (32 in this example) (step S57). This is schematically illustrated in Fig. 4, where the mark [X] depicts that the network port C02, which should be connected to the server corresponding to dongle ID D02, is no longer connected to computer port 02, but is now connected to computer port 32. When the network port connection table is a three-column table, the value of the third column for the entry for network port C02 is changed from computer port 02 to computer port 32.

From this point on, the KVM switch will transmit data between the network port (C02 in this example) and the new computer port (port 32 in this example) (step S58), so that the client continues to be connected to and exchanges data with the selected server (PC_ABC in this example), now via the new computer port (32 in this example). Thus, by steps S55 to S58, the KVM switch 10 automatically re-pairs the client computer (at the network port) with the selected server via the new computer port, without requiring the client computer to look up the new computer port for the selected server and perform another connection request.

If the selected server is unplugged from the currently selected computer port without being subsequently plugged into another computer port with the predetermined time period, the server is considered to have been disconnected, and the KVM switch 10 will update the network port connection table to remove the currently selected computer port number from the entry of the network port without replacing it with another computer port number. The KVM switch will also update the system configuration table to indicate that the server (identified by the dongle ID) is no longer connected to the system. The predetermined time period may be set by the system administrator.

It should be noted that the re-paring steps S55 to S58 are performed only when a dongle ID that has disappeared form a computer port is one that is currently connected to a network port and being accessed by a client.

When the client switches connection to a different server, steps S51 to S53 are performed to connect the client to the new server, so that the network port connection table is updated.

When the client logs out of the KVM switch, the network port connection table is updated to indicate that the network port in question is no longer associated with any dongle ID.

In the process shown in Fig. 5, the function of the dongles 30 is to respond to the polling request from the KVM switch 10 by transmitting their dongle numbers.

In some KVM switch systems, different media channels of the same client computer, such as video (desktop image), audio, virtual media (e.g., a USB storage devices connected to the client computer), can be connected to different servers at the same time and can be independently switched. For example, the client may transfer data between a USB storage device connected to the client and a first server, while at the same time exchanging video, keyboard and mouse data with a second server. Methods of implementing such connections are known in the art and are not described in detail here. The above-described auto re-paring method can be applied in such systems, by treating each media channel of the client as an independent network port.

As mentioned earlier, in some KVM switch systems, multiple KVM switches are connected together in a daisy-chain and/or cascading manner. Each computer port of the KVM switch system has a unique port number or ID. The client computer logs on to one of the KVM switches, sometimes referred to as the master, and can be connected to any computer port of the KVM switch system. Methods of implementing such a KVM system are known in the art and are not described in detail here. The above-described auto re-paring method can be applied in such systems, using the unique computer port numbers. The steps in the method of Fig. 5 are performed by the master KVM switch.

In the KVM system of Fig. 3, multiple clients 40 can be connected to the same server simultaneously. Methods of implementing such a KVM system are known in the art and are not described in detail here. The above-described auto re-paring method can be applied in such systems. Thus, in the network port connection table, the same dongle ID may be associated with two or more network ports.

The above described auto re-paring processes can also be applied to the communication between the KVM switch and a video session recording (VSR) device. In some KVM switch systems, the KVM switch transmits a copy of the video data (desktop images) associated with each server to the VSR device to be recorded. The VSR may be connected to the KVM switch via the network. When applying the auto re-paring method, the VSR device can be treated in a similar way as a client on a network port (in fact it may be referred to as a client). As a result, when a server is moved from one physical computer port to another, the video data from that server can continue to be recorded by the VSR as the same connection session between the client and the server.

An advantage of the auto re-paring method described above is that when a maintenance worker moves a server computer from one computer port to another within the KVM system, by unplugging the cable of the server from one computer port and then quickly re-plugging it into another computer port, the KVM switch keeps track of the computer port number of the server, and automatically re-establish connection between the network port and the same server now located at the new computer port. The client does not need to search for the new computer port number and re-request connection with it. This method is also advantageous when a maintenance worker accidentally unplugs a server cable, but quickly realizes the mistake and plugs it back into the same computer port.

According to another embodiment of the present invention, virtual computer port numbers are used to facilitate easier navigation for users.

As described earlier, in a conventional KVM system, on the OSD displayed on the client computer, the server computers are organized by the computer port numbers, as shown in Fig. 2A and 2B. As described earlier, this may cause confusion and inconvenience for the user when a server is moved from one computer port to another; the confusion and inconvenience are not eliminated even when the KVM switch automatically re-pairs the new computer port with network port. For example, in the above example, after the server PC_ABC is moved from computer port [02] to computer port [32], on the OSD display, the server PC_ABC will appear at a different location, namely computer port [32], even though the KVM switch 10 has already automatically connected the client to the new port [32]. To solve this problem, a unique virtual computer port number is associated with each server, and this association is independent of the physical computer port numbers that the servers are connected to and does not change when the server is moved from one physical computer port to another. In other words, the virtual port number for each server stays constant (unless it is changed by the administrator). The server-to-virtual-computer-port-number association may be customized for each user, and can be defined by the user and stored as a table on the KVM switch as a part of the user's preference data. In this server-to-virtual-computer-port-number association table, the servers may be identified by server names or by the dongle IDs associated with the servers.

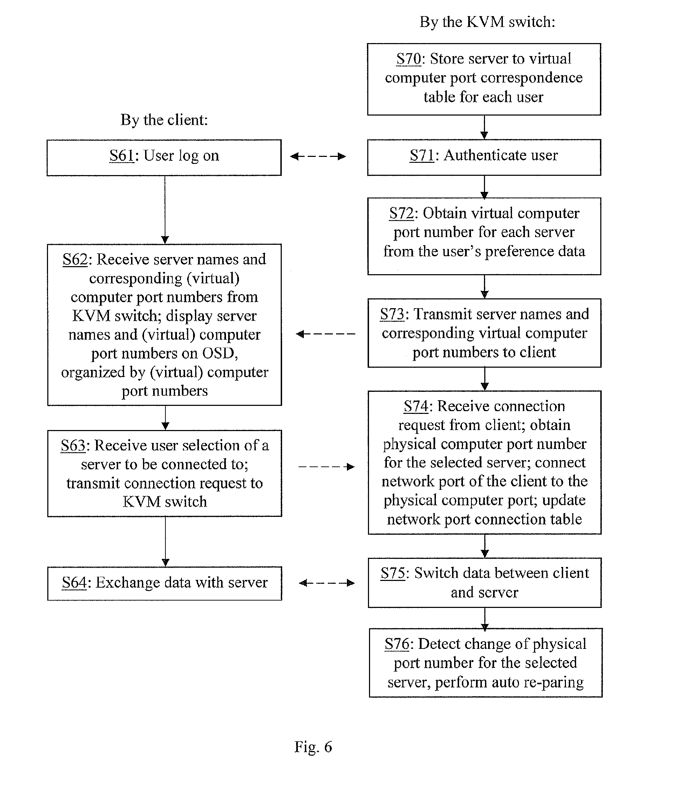

Fig. 6 schematically illustrates a process executed by the KVM 10 switch and the client 40. For each user of the system (which may be identified by user IDs), the KVM switch stores a server-to-virtual-computer-port-number association table customized for that user (step S70). The correspondence may be defined by the user or a system administrator. Then, after the KVM switch authenticates a user logon (steps S61, S71), the KVM switch accesses the user's customized server-to-virtual-computer-port-numbers association table to obtain the virtual computer port number for each server in the KVM switch system (step S72). The KVM switch then transmits to the client the server names and corresponding virtual computer port numbers of all servers on the KVM switch system (steps S73). In this transmission step, the KVM switch sends virtual computer port numbers the same way as a conventional KVM switch sends physical computer port number; in other words, the client is not aware that the computer port numbers it receives are virtual computer port numbers rather than physical computer port numbers. The dashed lines with arrows in Fig. 6 indicate data transmitted between the client and the KVM switch.

Based on the received server name and (virtual) computer port numbers, the client displays a list of servers on its OSD (step S62). In this OSD display, the servers are ordered by the computer port numbers as in conventional OSDs, so the appearance of the OSD display may be similar to that shown in Fig. 2A, but the computer port numbers [01], [02], etc. are now the virtual computer port numbers, rather than physical computer port numbers. Based on the OSD display, the user selects a server to be connected to, and the client transmits a connection request to the KVM switch (step S63). In this step, the connection request may identify the selected server either by the server name or by the selected computer port number, which is the virtual computer port number for the selected server.

Based on the receive connection request, the KVM switch obtains the physical computer port number for the selected server (step S74). This is done by referring to the user's server-to-virtual-computer-port-number association table (if the connection request only specifies the virtual computer port number), as well as the system configuration table maintained by the KVM switch that indicates which server (by dongle ID) is connected to which physical computer port. The KVM switch can now establish a connection between the client (the network port of the client) and the physical computer port that the selected server is plugged into. Step S74 also includes updating the network port connection table (Fig. 4) to record the dongle ID and the physical computer port number for the network port of the client.

The client can now exchange data with the selected server via the KVM switch (steps S64, S75). This may include, for example, transmitting video data representing a desktop image from the selected server to the client, and transmitting keyboard and/or mouse data from the client to the selected server. Audio data and other data may also be transmitted. During the connected session, the KVM switch monitors the presence of dongle IDs on the physical computer ports. If the selected server is moved from one physical computer port to another, the KVM server performs the auto re-paring steps (i.e. steps S55 to S58 in Fig. 5) to automatically re-establish connection between the client and the selected server without requiring the client to initiate another connection request (step S76). In fact, the client is likely not aware that the selected server has been disconnected and quickly re-connected except for a momentary freeze.

In the process shown in Fig. 6, the steps performed by the client 40 are the same as those performed by the client in a conventional KVM switch system. In other words, the software programs installed on the client do not need to be changed to implement this process.

Because the server-to-virtual-computer-port-number association does not change when the servers are moved on the physical computer ports, the OSD display on the client are always the same for the same user, unless the user or the system administrator changes the user's customized server-to-virtual-computer-port-number association table. Thus, for example, if some servers are moved around on the KVM switch system when the user is logged off, when he logs back on, the list of servers and their (virtual) computer port numbers will appear on the OSD the same way as before. This OSD display method is more user-friendly because the order of servers, and therefore the visual appearance of the OSD page that list the servers, will remain constant for each user. Further, when the user makes a "favorites" folder, the servers listed in the favorite folder, along with their (virtual) computer port numbers, will not change when a server is moved from one physical computer port to another.

Optionally, the OSD may provide an option for the user to choose to use either the virtual computer port number of the physical computer port number in the OSD display.

In summary, in embodiments of the present invention, by using the automatic re-paring process and the virtual computer port numbers, when a server is moved from one physical computer port to another with the KVM switch system, the connection between the moved server and the client it was connected will be automatically re-established, and the list of servers on the client's OSD including the favorite folder remains unchanged. As a result, the maintenance operation performed at the server room will be transparent to the client.

The above-described process steps of the KVM switch 10 may be implemented by computer programs (software or firmware) stored in a memory 13 of the KVM switch and executed by a control module 12 such as a microprocessor. The control module 12 also controls the switching circuit 11 for switching the data between network ports and server ports. The process steps may also be implemented in logic circuits of the KVM switch. More generally, the KVM switch may be any suitable remote management device.

It will be apparent to those skilled in the art that various modification and variations can be made in the remote server management method and related apparatus of the present invention without departing from the spirit or scope of the invention. Thus, it is intended that the present invention cover modifications and variations that come within the scope of the appended claims and their equivalents.

## Claims

1. A remote server management method, implemented on a remote management device, the remote management device including:
a plurality of computer ports for connecting to server computers, including at least a first computer port and a second computer port;
a user port for connecting to a user device;
a switching circuit for selectively connecting the user port to the first or the second computer port; and
a control module;
the method comprising:
(a) detecting a connection of a target server computer to the first computer port;
(b) transmitting video data representing a desktop image of the target server computer at the first computer port to the user device via the user port;
(c) automatically detecting a move of the target server computer from the first computer port to the second computer port; and
(d) upon the detection in step (c), transmitting video data representing a desktop image of the target server computer at the second computer port to the user port, based on a correspondence between the user port and the target server computer, without receiving any request from the user device via the user port to change computer ports.

2. The method of claim 1, wherein the correspondence between the user port and the target server computer is defined using a module ID of a computer interface module connected between the target server computer and the remote management device.

3. The method of claim 2, wherein step (a) includes detecting a presence of the computer interface module having the module ID connected at the first computer port; and
wherein step (c) includes, after step (a), detecting an absence of the computer interface module having the module ID from the first computer port, and within a predetermined time period thereafter, detecting a presence of the computer interface module having the module ID at the second computer port.

4. The method of claim 3, wherein the detecting steps in step (a) and step (c) are performed by periodically polling the computer interface modules connected to computer ports.

5. The method of claim 2, further comprising:
storing a system configuration table which indicates a correspondence between computer ports of the remote management device and module IDs of computer interface modules connected to the corresponding computer ports; and
upon the detection in step (c), updating the system configuration table.

6. The method of claim 1, further comprising, before step (b), receiving a connection request from the user device for connecting to the target server computer, and storing the correspondence between the user port and the target server computer based on the connection request.

7. The method of claim 1, wherein step (b) further comprises transmitting keyboard and mouse data from the user device to the target server computer via the client port and the first computer port, and step (d) further comprising transmitting keyboard and mouse data from the user device to the target server computer via the client port and the second computer port.

8. The method of claim 1, wherein the user device is a video session recording device.

9. The method of claim 1, further comprising, before step (b):
storing a correspondence between each of a plurality of server computers connected to the remote management device and a unique virtual computer port number, the virtual computer port numbers being independent of the computer ports that the server computers are connected to;
transmitting port names corresponding to the plurality of server computers and the corresponding virtual computer port numbers to the user device to be displayed to a user;
receiving a connection request from the user device which identifies a target virtual computer port number to be connected to;
determining the target server computer based on the correspondence between the server computers and the virtual computer port numbers;
storing the correspondence between the user port and the target server computer based on the determined target server computer.

10. A remote management device, comprising:
a plurality of computer ports for connecting to server computers, including at least a first computer port and a second computer port;
a user port for connecting to a user device;
a switching circuit for selectively connecting the user port to the first or the second computer port;
a control module; and
a memory having a computer readable program code embedded therein, the program code being configured to cause the remote management device to execute a process which comprises:
(a) detecting a connection of a target server computer to the first computer port;
(b) transmitting video data representing a desktop image of the target server computer at the first computer port to the user device via the user port;
(c) automatically detecting a move of the target server computer from the first computer port to the second computer port; and
(d) upon the detection in step (c), transmitting video data representing a desktop image of the target server computer at the second computer port to the user port, based on a correspondence between the user port and the target server computer, without receiving any request from the user device via the user port to change computer ports.

11. The remote management device of claim 10, wherein the correspondence between the user port and the target server computer is defined using a module ID of a computer interface module connected between the target server computer and the remote management device.

12. The remote management device of claim 11, wherein step (a) includes detecting a presence of the computer interface module having the module ID connected at the first computer port; and
wherein step (c) includes, after step (a), detecting an absence of the computer interface module having the module ID from the first computer port, and within a predetermined time period thereafter, detecting a presence of the computer interface module having the module ID at the second computer port.

13. The remote management device of claim 12, wherein the detecting steps in step (a) and step (c) are performed by periodically polling the computer interface modules connected to computer ports.

14. The remote management device of claim 11, wherein the process further comprises:
storing a system configuration table which indicates a correspondence between computer ports of the remote management device and module IDs of computer interface modules connected to the corresponding computer ports; and
upon the detection in step (c), updating the system configuration table.

15. The remote management device of claim 10, wherein the process further comprises, before step (b), receiving a connection request from the user device for connecting to the target server computer, and storing the correspondence between the user port and the target server computer based on the connection request.

16. The remote management device of claim 10, wherein step (b) further comprises transmitting keyboard and mouse data from the user device to the target server computer via the client port and the first computer port, and step (d) further comprising transmitting keyboard and mouse data from the user device to the target server computer via the client port and the second computer port.

17. The method of claim 10, wherein the process further comprises, before step (b):
storing a correspondence between each of a plurality of server computers connected to the remote management device and a unique virtual computer port number, the virtual computer port numbers being independent of the computer ports that the server computers are connected to;
transmitting port names corresponding to the plurality of server computers and the corresponding virtual computer port numbers to the user device to be displayed to a user;
receiving a connection request from the user device which identifies a target virtual computer port number to be connected to;
determining the target server computer based on the correspondence between the server computers and the virtual computer port numbers;
storing the correspondence between the user port and the target server computer based on the determined target server computer.

18. A remote server management method, implemented on a remote management device, the remote management device including:
a plurality of physical computer ports for connecting to server computers;
a user port for connecting to a user device;
a switching circuit for selectively connecting the user port to one of the physical computer ports; and
a control module;
the method comprising:
(a) storing a system configuration table which indicates a correspondence between physical computer ports of the remote management device and server computers connected to the physical computer ports;
(b) storing a correspondence between each of a plurality of server computers connected to the remote management device and a unique virtual computer port number, the virtual computer port numbers being independent of the physical computer ports that the server computers are connected to;
(c) based on the correspondence between the server computers and the virtual computer port numbers, transmitting port names corresponding to the plurality of server computers and the corresponding virtual computer port numbers to the user device via the user port to be displayed to a user;
(d) receiving a connection request from the user device which identifies a target virtual computer port number to be connected to;
(e) determining a target server computer corresponding to the virtual computer port number using the correspondence between the server computers and the virtual computer port numbers;
(f) determining a physical port which the target server computer is connected to using the system configuration table; and
(g) transmitting video data representing a desktop image of the target server computer at the physical computer port determined in step (f) to the user device via the user port.

19. The method of claim 18, further comprising:
after step (e), storing a correspondence between the user port and the target server computer based on the determined target server computer;
after step (g), monitoring the physical computer ports to automatically detecting a move of the target server computer from the physical computer port determined in step (f) to another physical computer port;
upon the detection, transmitting video data representing a desktop image of the target server computer at the other computer port to the user port, based on the correspondence between the user port and the target server computer, without receiving any request from the user device via the user port to change physical computer ports.

20. The method of claim 18, further comprising:
storing a plurality of user IDs of users of the remote management device,
wherein step (b) includes storing a plurality of correspondence between the server computers and the virtual computer port numbers, each correspondence being customized for a user ID;
before step (c), authenticating a user logon from the user device; and
wherein in step (c), the corresponding virtual computer port numbers transmitted to the client are based on the correspondence between the server computers and the virtual computer port numbers customized for the authenticated user.
